# EUROPEAN PATENT SPECIFICATION

(11) **EP 2 063 480 B1**
(45) Date of publication and mention of the grant of the patent: **15.09.2010**
(21) Application number: 08020570.1
(22) Date of filing: 26.11.2008
(51) Int. Cl.: H01M 8/02

(54) **Metallic bipolar plate for fuel cells and method for manufacturing the same**
Metallische bipolare Metallplatte für Brennstoffzellen und Verfahren zu deren Herstellung
Plaque métallique bipolaire pour piles à combustible et son procédé de fabrication

(30) Priority: 26.11.2007 JP 2007304544; 02.10.2008 JP 2008256993
(43) Date of publication of application: 27.05.2009
(73) Proprietor: Daido Tokushuko Kabushiki Kaisha, Higashi-ku Nagoya Aichi (JP)
(72) Inventor: Takagi, Shinobu, Aichi 457-8545 (JP); Hisada, Tatsuo, Aichi 457-8545 (JP); Yagi, Shinichi, Aichi 457-8545 (JP)
(74) Representative: Diehl & Partner GbR

(56) References cited:
- WO-A-2006/043505
- JP-A- 2004 165 121
- US-A1- 2005 100 771
- US-A1- 2005 252 892

## Description

### FIELD OF THE INVENTION

The present invention relates to a metallic bipolar plate for fuel cells in which a pair of adjacent metallic plates are firmly and surely joined with each other and a method for manufacturing the same.

### BACKGROUND OF THE INVENTION

In general, a fuel cell of a unit cell is constituted of a membrane electrode assembly composed of a solid polymer membrane and gas diffusion layers formed on both sides thereof via a catalyst layer; and a pair of plates disposed on both sides of the membrane electrode assembly and having a channel of a reaction gas. As to such bipolar plates, a metallic bipolar plate with excellent press moldability is studied, and for example, those obtained by press forming a stainless steel sheet with excellent corrosion resistance are regarded to be potential.

For example, for the purpose of increasing airtightness of a stack type fuel cell, there are proposed a fuel cell stack prepared by subjecting mutually adjacent anode plate and cathode plate of a unit fuel cell, after previously forming a nitride layer on a surface of every peripheral part of the both, to laser welding between such peripheral parts, thereby smoothening the nitride layer; and a method for manufacturing a bipolar plate for fuel cells (see, for example, pages 1 to 28 and Figs. 3 and 4 of JP-A-2007-73422).

However, in the case of laser welding the metallic plates made of a stainless steel to each other, since an extremely thin passive film made of a Cr oxide (for example, Cr₂O₃, Cr(OH)₃, etc.) is previously formed on the surfaces thereof; and therefore, when the adjacent metallic plates are joined with each other, the corrosion resistance before joining cannot be sufficiently maintained due to, for example, a cause that a Cr carbide is deposited on a formed welded part. Furthermore, not only the corrosion resistance in the vicinity of the foregoing welded part is lowered, but a warpage of each of the metallic plates is easily generated due to the heat generated during the laser welding. Moreover, when the welding spot and welding area are increased for the purpose of preventing the generation of such a warpage, there arises a problem that not only the corrosion resistance is further lowered, but the manufacturing costs and time increase.

International application WO 2006/043505 A1 discloses a fuel cell stack and a separator joining method, wherein an anode separator and a cathode separator are integrated together by metal joining by fusing a low-melting-point alloy sheet.

Document US 2005/0252892 A1 discloses laser welding of conductive coated metallic bipolar plates. According to this document, if laser welding is performed, the desired result is obtained regardless of the presence of an organic coating in the region of the plates being welded and regardless of the ablating of the organic coating by the laser beam.

### SUMMARY OF THE INVENTION

An object of the invention is to solve the problems which have been described in the above and to provide a metallic bipolar plate for fuel cells, in which a pair of metallic plates which are composed of a stainless steel, an Fe-Ni based alloy or an Ni-base alloy and are adjacent to each other can be firmly and surely joined with each other, and which can be inexpensively manufactured; and a method for manufacturing the same.

In order to solve the foregoing problems, the invention has been attained on the basis of intensive investigations and experiments made by the present inventors and achieved on an idea that joining of a pair of metallic plates which are made of a stainless steel or the like and are adjacent to each other is performed by brazing between the front surfaces thereof on each of which a passive film is not present and an extremely thin layer of a noble metal is coated.

Specifically, the present invention provides,
(1) a metallic bipolar plate for fuel cells, comprising:
   a pair of metallic plates for fuel cells each comprising a substrate which comprises a stainless steel, an Fe-Ni based alloy or an Ni-base alloy, has a front surface and a back surface, and has a plurality of channels of a reaction gas formed on the front surface; and
   a brazed portion joining the back surfaces of the substrates in such a way that the pair of metallic plates are made to face each other,
   wherein, in the pair of metallic plates, a thin layer of a noble metal is coated on an entirety of the front surface of each of the substrates or on at least a part of a convex portion between the plurality of channels of a reaction gas on the front surface of each of the substrates, and another thin layer of a noble metal having a thickness of from 0.5 to 60 nm is coated on an entirety of the back surface of each of the substrates or on at least a part including the brazed portion on the back surface of each of the substrates, and
   wherein the metallic bipolar plate has, directly below a brazing material in the brazed portion, a joint portion where the thin layer of a noble metal is not present and the brazing material and the substrate are directly joined with each other.

   According to (1) above, in performing brazing such as soldering while making the back surfaces of a pair of the metallic plates in each of which a plurality of channels of a reaction gas are formed on the front surface thereof and necessary conductivity is imparted to the front surface thereof adjacent to each other, when the considerably thin layers of a noble metal are made to face each other and brazing is performed while interposing a brazing material therebetween, the substrates of the pair of the metal plates can be firmly and surely joined with each other. Accordingly, it is possible to easily and inexpensively provide a metallic bipolar plate to be used for fuel cells.
   When the thickness of the thin layer coated on the back surface of the metallic plate is less than 0.5 nm, according to a practical surface treatment technology, not only there is a possibility that the thickness is scattered, but there is a possibility that the formation of a passive film cannot be partially inhibited. On the other hand, when the thickness of the thin layer exceeds 60 nm, the thin layer of a noble metal cannot be diffused in the brazing material over the entirety of the thickness at the time of brazing as described later, and a part of the thin layer remains on the back surface of the substrate, thereby generating scattering in joining strength. For that reason, the thickness of the thin layer of a noble metal on the back surface is controlled within the foregoing range.
   The stainless steel which works as the substrate includes austenite based, austenite/ferrite based and precipitation hardening based stainless steels. Examples of the austenite based stainless steel include SUS316L, SUS304 and SUS321.
   On the other hand, examples of the Fe-Ni based alloy which works as the substrate include Fe-43% by mass Ni-23% by mass Cr-2.7% by mass Mo (for example, INCOLOY825). Furthermore, examples of the Ni-base alloy include 61.6% by mass Ni-21.9% by mass Cr-8.9% by mass Mo-3.8% by mass Fe-3.6% by mass Nb (for example, INCONEL625).
   Further, examples of the noble metal include Au, Pt, Pd and Ru and alloys containing any one of these metals as a basis material.
   Furthermore, examples of the thin layer include a plated layer by electrolytic plating and a sputtered layer by sputtering.
   Further, the term, "a part of the front surface of the substrate", herein refers to the entirety of a top surface of a convex portion between the plurality of channels of a reaction gas which subsequently comes into contact with an electrode, or a portion which is a part of the top surface of the convex portion and which has an area ensuring conductivity.
   Furthermore, the term, "a part of the back surface of the substrate", herein refers to a portion of the back surface including the brazed joint portion.
   Further, the joint portion refers to not only the entirety (100%) of an interface between the brazing material and the substrate after the brazing, but a site of the brazed interface where the brazing material and the substrate (surface layer of the substrate) are directly joined with each other at an area ratio of 30% or more, desirably 40% or more, and more desirably 50% or more.
   Furthermore, in the metallic bipolar plate, the thin layer of a noble metal may be coated (retained) on the entirety of the back surfaces of a pair of the brazed substrates other than the brazed joint portion, or on a part thereof.
   In addition, a space interposed between a pair of the metallic plates and composed of concave portions between the convex portions including the joint portion on the back surfaces thereof is utilized as a circulation path for cooling water or the like in a stack type fuel cell which is subsequently formed.
   Further, the invention provides,
(2) the metallic bipolar plate for fuel cells according to (1) above, wherein the thin layer of a noble metal coated on the entirety of the back surface of each of the substrates or on at least the part including the brazed portion on the back surface of each of the substrates has a thickness of from 1 to 20 nm.
   According to (2) above, a thin layer of a noble metal having a stable thickness can be coated on the back surface of the substrate of the metallic plate, as well as the thin layer of a noble metal can be surely diffused in the brazing material over the entirety of the thickness at the time of brazing.
   Furthermore, the invention provides,
(3) the metallic bipolar plate for fuel cells according to (1) or (2) above, wherein the joint portion where the brazing material of the brazed portion and the substrate are directly joined with each other occupies 30% or more of an area at an interface between the brazing material and the substrate.
   According to (3) above, the surface layer of the back surface of the substrate and the brazing material are directly joined with each other at the interface therebetween by means of brazing in terms of an area ratio of 30% or more, and the thin layer of a noble metal is present in the remaining portion. That is, when a pair of the metallic plates are disposed in such a manner that the respective thin layers of a noble metal are adjacent to each other and brazed with the brazing material interposed therebetween, for example, not only a portion where an Au atom of an extremely thin layer composed of an Au-plated layer is substantially diffused in the brazing material is formed, but the brazing material and each of the substrates can be directly brazed with each other. Accordingly, it is possible to surely and inexpensively provide a metallic bipolar plate in which a pair of metallic plates are firmly brazed.
   The joint portion where the substrate (surface layer of the substrate) and the brazing material are directly joined with each other occupies desirably 40% or more, and more desirably 50% or more of an area at the interface between them.
   On the other hand, the invention provides, as a first method for manufacturing a metallic bipolar plate for fuel cells,
(4) a method for manufacturing a metallic bipolar plate for fuel cells, comprising the steps of:
   washing an entirety or a part of a front surface of a substrate on which a plurality of channels of a reaction gas is subsequently formed and an entirety or a part of a back surface of the substrate on which the plurality of channels of a reaction gas is not subsequently formed, the substrate comprising a stainless steel, an Fe-Ni based alloy or an Ni-base alloy;
   subjecting the entirety or a part of each of the washed front surface and back surface of the substrate to an acid treatment, thereby removing a passive film;
   coating a thin layer of a noble metal directly on the entirety or a part of each of the front surface and back surface of the substrate from which a passive film has been removed;
   press forming the substrate having the thin layer of a noble metal coated thereon to form the plurality of channels of a reaction gas on the front surface of the substrate, thereby forming a metallic plate for fuel cells;
   making the back surfaces of the substrates of a pair of the metallic plates face each other and disposing a brazing material between portions of the substrates each having the thin layer of a noble metal and being adjacent between the back surfaces thereof; and
   heating the brazing material at a temperature higher than a melting point thereof, thereby diffusing and absorbing the thin layers of a noble metal being into contact with the brazing material and directly brazing the brazing material and the pair of the adjacent substrates.

   According to (4) above, there is a portion where the passive film is not present between the surface layer on the back surface of the substrate and the thin layer of a noble metal and the substrate and the thin layer come into direct contact with each other. For that reason, in brazing a pair of the press formed metallic plates, by making extremely thin layers of a noble metal coated on the back surfaces on each of which a plurality of channels of a reaction gas are not formed adjacent to each other, interposing a brazing material therebetween and performing brazing at a relatively low temperature, the metallic plates can be firmly and surely joined with each other. Accordingly, it is possible to surely and inexpensively provide a metallic bipolar plate which is used for fuel cells and which is less in a warpage.
   A degreasing treatment is also included in the above-mentioned washing. The passive film is a Cr oxide (for example, Cr₂O₃, Cr(OH)₃, etc.). Furthermore, a thickness of the thin layer of a noble metal to be coated on the back surface of the substrate is desirably from 0.5 to 60 nm, more desirably from 1 to 20 nm, and further desirably from 3 to 10 nm. Soldering is also included in the brazing.
   In addition, with respect to the three steps including washing, acid treatment and coating of a thin layer of a noble metal and the step of performing pressing, the order in which after performing the latter in advance, the former is carried out may also be adopted.
   Furthermore, the invention provides, as a second method for manufacturing a metallic bipolar plate for fuel cells,
(5) A method for manufacturing a metallic bipolar plate for fuel cells, comprising the steps of:
   washing an entirety or a part of a front surface of a substrate on which a plurality of channels of a reaction gas is subsequently formed and an entirety or a part of a back surface of the substrate on which the plurality of channels of a reaction gas is not subsequently formed, the substrate comprising a stainless steel, an Fe-Ni based alloy or an Ni-base alloy;
   irradiating the entirety or a part of each of the washed front surface and back surface of the substrate with an ion beam, thereby removing a passive film;
   subjecting the entirety or a part of each of the front surface and back surface of the substrate from which a passive film has been removed to sputtering with a noble metal, thereby directly coating a thin layer of a noble metal on the substrate;
   press forming the substrate having the thin layer of a noble metal coated thereon to form the plurality of channels of a reaction gas on the front surface of the substrate, thereby forming a metallic plate for fuel cells;
   making the back surfaces of the substrates of a pair of the metallic plates face each other and disposing a brazing material between portions of the substrates each having the thin layer of a noble metal and being adjacent between the back surfaces thereof; and
   heating the brazing material at a temperature higher than a melting point thereof, thereby diffusing and absorbing the thin layers of a noble metal being into contact with the brazing material and directly brazing the brazing material and the pair of the adjacent substrates.

According to (5) above, there is a portion where the passive film is not present between the surface layer on the back surface of the substrate and the thin layer of a noble metal and the substrate and the thin layer come into direct contact with each other. For that reason, in making a pair of the metallic plates obtained by press forming adjacent to each other and brazing them, by facing and making the thin layers of a noble metal come close to each other, interposing a brazing material therebetween and performing brazing at a relatively low temperature, the metallic plates can be firmly and surely joined with each other via such a brazing material. Moreover, since a dry etching step for irradiating an ion beam and a sputtering step can be continuously carried out inside the same sputtering device, it is possible to easily and inexpensively manufacture a metallic bipolar plate to be used for fuel cells with a less warpage by substantially decreasing the number of steps as compared with the case of the first manufacturing method.

With respect to the three steps including washing, dry etching and sputtering and the step of performing pressing, the order in which after performing the pressing in advance, the foregoing three steps are carried out may also be adopted.

### BRIEF DESCRIPTION OF THE DRAWINGS

Fig. 1 is a front view showing a metallic plate of an embodiment to be used in the invention.
Fig. 2 is a cross-sectional view along an arrow of an X-X line in Fig. 1.
Fig. 3 is a cross-sectional view along an arrow of a Y-Y line in Fig. 1.
Fig. 4 is a flow chart showing a first manufacturing method of a metallic bipolar plate according to the invention.
Fig. 5 is a flow chart showing a second manufacturing method of a metallic bipolar plate according to the invention.
Fig. 6 is a diagrammatic cross-sectional view showing manufacturing steps of a metallic bipolar plate according to the invention.
Fig. 7 is a partial enlarged cross-sectional view schematically showing an embodiment of a dot-and-dash line portion V in Fig. 6.
Fig. 8 is a partial enlarged cross-sectional view schematically showing a different embodiment of a dot-and-dash line portion V in Fig. 6.
Fig. 9 is a cross-sectional view showing a metallic bipolar plate for fuel cells according to the invention.
Fig. 10 is a diagrammatic view showing steps of manufacturing a fuel cell of a unit cell using the foregoing metallic bipolar plate.
Fig. 11 is a diagrammatic view showing steps of manufacturing a stack type fuel cell using the foregoing metallic bipolar plate.

### Description of Reference Numerals and Signs

1: substrate
2: passive film
3: Au-plated layer/Au-sputtered layer (thin layer of a noble metal)
4: front surface
5: back surface
6: channel of a reaction gas
P2: metallic plate
P3: metallic bipolar plate
R: solder (brazing material)
S1: washing step
S2: acid treatment step
S3: Au-plating step
S4: pressing step
S5: dry etching step
S6: Au-sputtering step

### DETAILED DESCRIPTION OF THE INVENTION

Best modes for carrying out the invention are hereunder described.

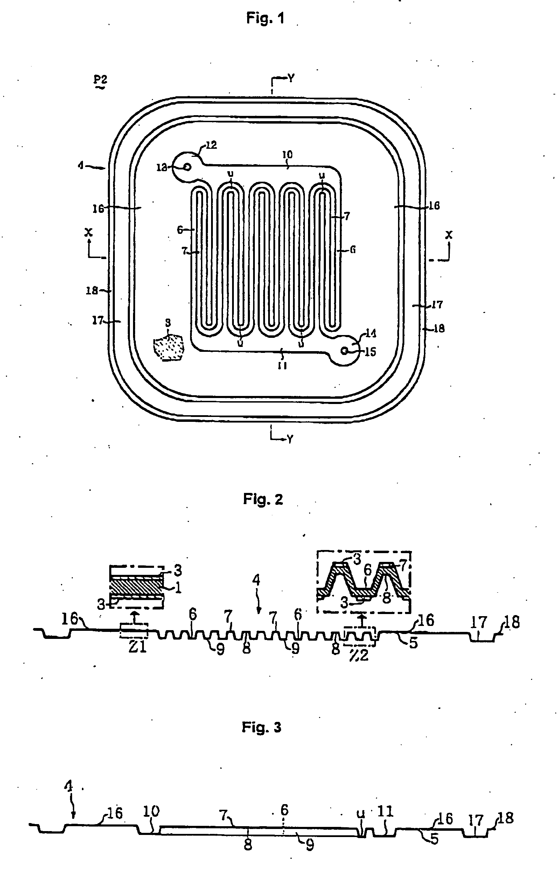

Fig. 1 is a front view showing a metallic plate P2 for fuel cells of an embodiment which is used for the metallic bipolar plate for fuel cells according to the invention and along the sense orthogonal to its front surface 4. Fig. 2 is a cross-sectional view along an arrow of an X-X line in Fig. 1; and Fig. 3 is a cross-sectional view along an arrow of a Y-Y line in Fig. 1.

The metallic plate for fuel cells (hereinafter referred to simply as "metallic plate") P2 is one obtained by press forming a thin sheet made of, for example, an austenite based stainless steel (for example, SUS316L) and having a thickness of about 0.1 mm. As illustrated in Figs. 1 to 3, it is provided with a substrate 1 appearing substantially a regular square and its front surface 4 and back surface 5. A raw material of such a plate P2 may be an Fe-Ni based alloy or an Ni-base alloy.

A plurality of channels 6 of a reaction gas; a plurality of convex portions 7 for partitioning the plurality of channels 6 from each other; a pair of header portions 10 and 11 which are positioned in both ends of each of the channels 6 and which become depressed substantially in a rectangle; a gas supplying portion 12 which is communicated with an end of the one of the header portions (head portion 10) and which is opened with a supplying hole 13; and a gas discharging portion 14 which is communicated with an end of the other one of the header portions (header portion 11) and which is opened with a discharging hole 15 are provided in a substantially central portion on the front surface 4 of the metallic plate P2.

On the other hand, a plurality of concave portions 8 and convex portions 9 which are turnovers of the respective convex portions 7 and concave portions 8 are positioned substantially in a central portion on the back surface 5 of the metallic plate P2.

As illustrated in Figs. 1 to 3, a periphery 18 having a narrow width, a concave part 17 which is disposed adjacent along the entirety of the inside of the periphery 18 and a convex part 16 having a wide width which is disposed adjacent along the entirety of the inside of the concave part 17 are provided at the outer periphery on the front surface 4 of the metallic plate P2; and the channels 6, the convex portions 7, the header portions 10 and 11, the gas supplying portion 12 and the gas discharging portion 14 are positioned while being surrounded by the convex part 16.

On the other hand, a convex part and a concave part which are turnovers of the periphery 18, the concave part 17 and the convex part 16 are provided at the outer periphery on the back surface 5 of the metallic plate P2; and the concave portions 8 and the convex portions 9 and the like are positioned while being surrounded thereby.

As illustrated in Figs. 1 and 2, the individual channels 6 of a reaction gas appear substantially a slender N-shape on a planar view; and the convex portions 7 positioning on the both sides thereof appear substantially a slender inverse N-shape on a planar view. Also, a pair of U-turn portions u which are substantially a U-shape on a planar view is positioned in the midway of each of the channels 6. The reaction gas which flows through the channel 6 is a fuel gas such as hydrogen or an oxidizing agent gas such as air.

As illustrated in schematic partial enlarged cross-sectional views of a dot-and-dash line portion in Fig. 1 and a dot-and-dash line portion Z1 in Fig. 2, on the entirety of the front surface 4 and the entirety of the back surface 5 of the metallic plate P2, an Au layer (thin layer of a noble metal) 3 having a thickness of from 0.5 to 60 nm is coated on each of the entireties of the both surfaces of the substrate 1 made of a stainless steel or an Fe-Ni based alloy. As illustrated in Fig. 2, a passive film made of a Cr oxide which is usually formed on the surface of a stainless steel material or the like is not present between the substrate 1 and the respective Au layer 3, but the substrate 1 and the respective Au layer 3 come into direct contact with each other.

As illustrated in a schematic partial enlarged cross-sectional view of a dot-and-dash line portion Z2 in Fig. 2, the Au layer 3 may be provided on the front surface 4 of the metallic plate P2 in such a form that it is at least coated on only the entirety of a top surface of the convex portion 7 for partitioning the channel 6 of a reaction gas (a part of the front surface) or only a portion of such a top surface (a part of the front surface); and, on the back surface 5, that it is coated on only the entirety of a top surface of the concave portion 9 positioning on the opposite side of each channel 6 (a part of the back surface) or only a portion of such a top surface which includes a brazed portion as described later (part of the back surface). In the case of such a form of coating only a part of the front surface and back surface, although the Au layer 3 and the substrate 1 come into direct contact with each other on the surface on which the Au layer 3 is coated, a passive film as described below is formed on the surface layer of the substrate 1 on other surfaces.

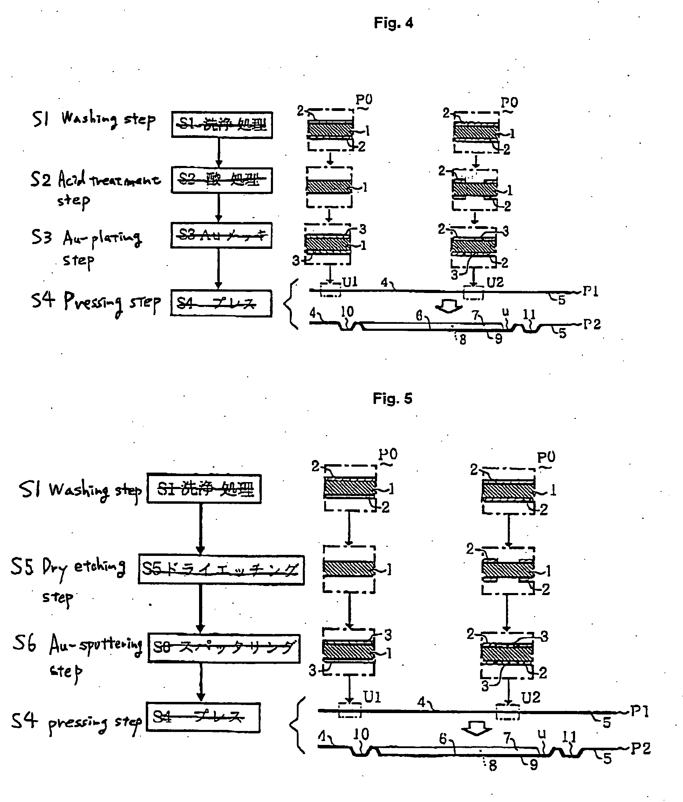

Here, the first and second manufacturing methods for obtaining the metallic bipolar plate P3 for fuel cells according to the invention are described with reference to Figs. 4 to 9. In Figs. 4 and 5, the metallic plate P2 is illustrated while being slightly simplified.

Fig. 4 is concerned with a former stage of the first manufacturing method. As schematically illustrated in each frame of a right-and-left dot-and-dash line in the uppermost section in Fig. 4, a raw steel sheet P0 made of a stainless steel (for example, SUS316L) or an Fe-Ni based alloy (for example, INCOLOY825) and having a thickness of about 0.1 mm is the substrate 1 containing prescribed amounts of Cr and Ni and the like; and a passive film 2 having a thickness of about several nm and made of a Cr oxide (for example, Cr₂O₃, Cr(OH)₃, etc.) is formed on the entirety of each of the front surface 4 and the back surface 5 thereof.

First of all, a washing step (S1) is carried out by washing the raw steel sheet P0 in surfactant-containing wash water or pure water to remove dusts attached on the front surface 4 and back surface 5, followed by dipping the steel sheet in a sodium hydroxide aqueous solution or an organic solvent such as acetone, thereby removing and degreasing oils and fats attached to the front surface and the back surface.

Next, a step (S2) of conducting an acid treatment by dipping the washed raw steel sheet P0 in a mixed acid (chiefly a mixed acid of sulfuric acid, nitric acid and hydrochloric acid), hydrochloric acid or sulfuric acid is carried out. As a result, as illustrated in a frame on the left side in Fig. 4, only the substrate 1 from which the passive film 2 has been removed from the entirety of each of the front surface 4 and the back surface 5 remains. As illustrated in a frame on the right side in Fig. 4, the acid treatment by means of masking may also be adopted to form the substrate 1 from which the passive film has been removed from a part of each of the front surface 4 and the back surface 5.

Next, a step (S3) of applying electrolytic Au-plating to the entirety or a part of each of the front surface 4 and the back surface 5 of the substrate 1 to thereby coat the Au-plated layer (thin layer of a noble metal) 3 is carried out. As a result, as illustrated in dot-and-dash portions U1 and U2 as well as respective dot-and-dash frames in Fig. 4, a metallic plate raw sheet P1 in which the Au-plated layer 3 having a thickness of from 0.5 to 60 nm is coated on the entirety or a part of each of the front surface 4 and the back surface 5 of the substrate 1 is obtained.

Works from the step (S2) of an acid treatment to the step (S3) of coating the Au-plated layer 3 are carried out in a non-oxidizing atmosphere such as argon or nitrogen. Also, in the case of coating the Au-plated layer 3 on a part of each of the front surface 4 and the back surface 5 of the substrate 1, the electrolytic Au-plating or the like is carried out in a state that other part of each of the front surface 4 and the back surface 5 is masked.

Furthermore, a step (S4) of press forming is carried out by inserting the metallic plate raw sheet P1 in which the Au-plated layer 3 is coated on each of the front surface 4 and the back surface 5 between a pair of non-illustrated press dies and then press forming the metallic plate raw sheet. As a result, as illustrated in the lowermost section in Fig. 4, a metallic plate P2 similar to that described above, in which the channels 6 of a reaction gas, the convex portions 7 and the U-turn portions u and the like are provided substantially in the central portion on the front surface 4; and the concave portions 8 and the convex portions 9 and the like are provided substantially in a central portion of the back surface 5, is formed.

Fig. 5 is concerned with a former stage in the second manufacturing method for obtaining the metallic bipolar plate P3 for fuel cells according to the invention.

As illustrated in the uppermost stage in Fig. 5, a washing step (S1) is carried out by bringing a raw steel sheet P0 into contact with surfactant-containing wash water, followed by dipping it in a sodium hydroxide aqueous solution or acetone to degrease and wash a front surface 4 and a back surface 5, thereby removing stains or oils and fats or the like attached to the surface layer.

Next, a dry etching step (S5) is carried out by conveying the raw steel P0, the front surface 4 and back surface 5 of which have been washed, into a high-vacuum sputtering device and irradiating it with an ion beam by an ion gas such as Ar, to thereby remove a passive film 2 formed on the entirety or a part of each of the front surface 4 and the back surface 5 in a required thickness (for example, about 20 nm) as illustrated in the respective right-and-left frames in the second stage in Fig. 5.

Subsequently, a step (S6) of applying sputtering by means of vapor deposition of Au (noble metal) disposed as a target on the entirety or a part of each of the front surface 4 and the back surface 5 of the raw steel sheet P0 immediately after drying etching inside the sputtering device is carried out. As a result, as illustrated in the respective right-and-left frames in the third stage in Fig. 5, a metallic plate raw sheet P1 in which an Au-sputtered layer (thin layer of a noble metal) 3 having a thickness of from 0.5 to 60 nm is directly coated on the entirety or apart of each of the front surface 4 and the back surface 5 of the substrate 1 is obtained.

Then, a pressing step (S4) similar to that described above is applied to the metallic plate raw sheet P1 in which the Au-sputtered layer 3 has been coated on the entirety or a part of each of the front surface 4 and the back surface 5 of the substrate 1. As a result, as illustrated in the lowermost stage in Fig. 5, a metallic plate P2 similar to that described above is obtained.

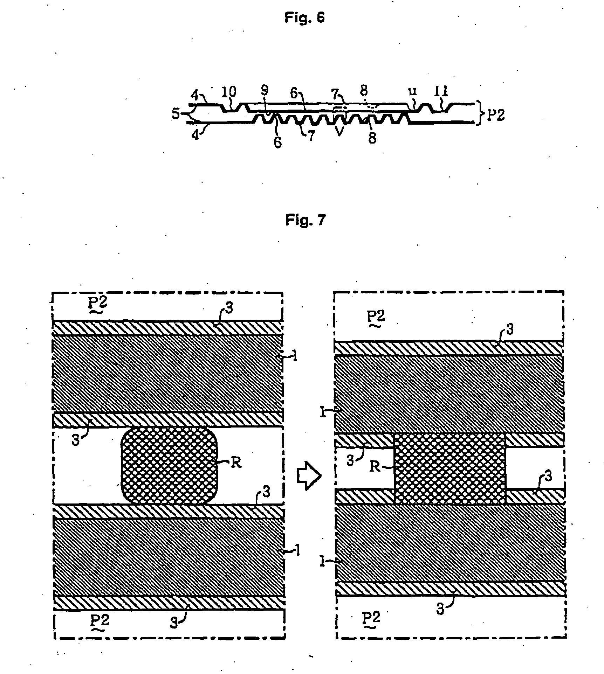

Figs. 6 to 8 are concerned with a latter stage of the manufacturing method of the metallic bipolar plate P3 which is common in the first and second manufacturing methods according to the invention.

First of all, as illustrated in Fig. 6, a pair of the metallic plates P2 is made to come close to each other such that the back surfaces 5 and 5, on each of which the channels 6 are not formed face, each other. On a top surface of the convex portion 9 on the back surface 5 of one of the metallic plates P2 or the back surface of the header portion 10, a paste-shaped solder (brazing material) R is coated in advance in a linear form, a dotted form or a planar form.

The solder (brazing material) R is positioned above the thin layer 3 ofAu (noble metal). Also, a paste-shaped or preform material made of a low-melting alloy such as Sn-Ag based, Sn-Cu based, Sn-Ag-Cu based, Sn-Ag-Bi based, Sn-Bi based or Sn-Zn-Bi based alloys may be used for the brazing material R to be used in the invention in place of the foregoing solder (Pb-Sn).

As illustrated in a partial enlarged cross-sectional view on the left side of Fig. 7 showing an enlarged part of a dot-and-dashed portion V in Fig. 6, the paste-shaped solder R is disposed such that it is interposed between the Au thin layers (Au-plated layers or Au-sputtered layers) 3 and 3 coated on the entirety of each of the back surfaces 5 of a pair of the metallic plates P2. A pair of the metallic plates P2 is restrained in such a state, followed by heating at about 200°C for several seconds.

As a result, as illustrated in the right side of a solid-white arrow in Fig. 7, the solder R is once melted and then solidified for compression. At the same time, since the Au atom in the Au thin layer 3 is diffused into the adjacent solder R due to the foregoing heating, the solder R after solidification is directly brazed (joined) with the respective substrates 1 of a pair of the metallic plates P2.

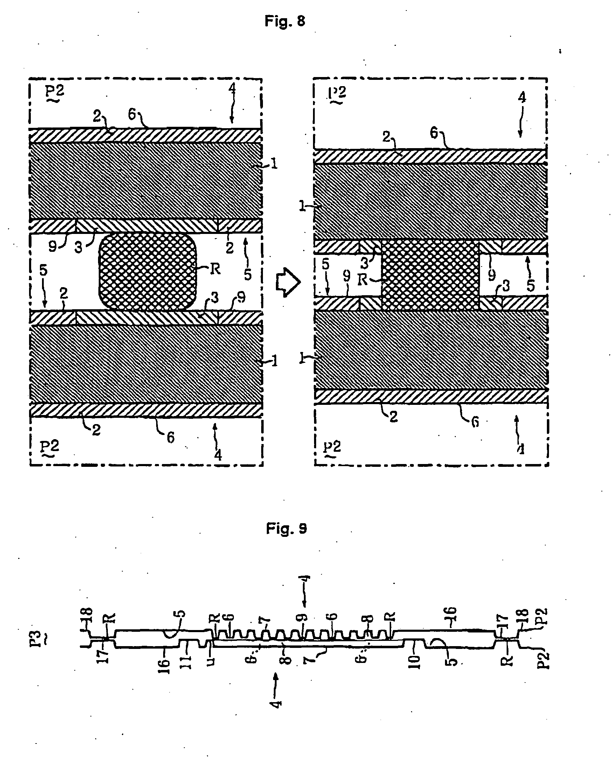

On the other hand, as illustrated in a partial enlarged cross-sectional view on the left side of Fig. 8, the paste-shaped solder R may be disposed such that it is interposed between the Au thin layers 3 and 3 coated on a part of each of the back surfaces 5 of a pair of the metallic plates P2. A pair of the metallic plates P2 is restrained in such a state, followed by heating at about 200°C for several seconds.

As a result, as illustrated in the right side of a solid-white arrow in Fig. 8, the solder R is once melted and then solidified for compression. At the same time, since the Au atom in the Au thin layer 3 is diffused into the adjacent solder R by means of the foregoing heating, the solder R after solidification is directly brazed (joined) with the respective substrates 1 of a pair of the metallic plates P2.

The directly brazed joint portion may occupy 30% or more, desirably 40% or more, and more preferably 50% or more of an area at the interface between the substrate 1 and the solder (brazing material) R Also, the direct brazing between the substrate 1 and the solder R is caused due to the matter that it becomes possible to achieve the foregoing diffusion because the Au-plated layer 3 is an extremely thin membrane having a thickness of from 0.5 to 60 nm, and desirably from 1 to 20 nm. Moreover, a pair of the metallic plates P2 can be firmly and surely brazed in a relatively low heating temperature range.

As illustrated in a cross-sectional view of Fig. 9, a pair of the metallic plates P2 is brazed via the low-melting solder R by means of the foregoing soldering (brazing) between the back surfaces 5 and 5 faced and made to come close to each other such that the respective channels 6 are mutually orthogonal. Thus, a metallic bipolar plates P3 in which the channels 6 of a reaction gas on the front surfaces 4 and 4 of the respective metallic plates P2 are disposed orthogonal to each other is obtained.

According to the foregoing metallic bipolar plates P3 and method for manufacturing the same according to the invention, in making a pair of the metallic plates P2 each of which is formed by press forming the metallic plate raw sheet P1 adjacent to each other and performing brazing such as soldering, by facing the extremely thin layers 3 and 3 of Au (noble metal) each other and performing soldering (brazing) while interposing the solder (brazing material) R therebetween, the substrates 1 and 1 of the metallic plates P2 and P2 can be firmly and surely joined with each other via only the solder R soldered at a relatively low temperature without mediating the passive film 2. Accordingly, it is possible to easily and inexpensively provide the metallic bipolar plate P3 in which a pair of the metallic plates P2 which have corrosion resistance and are free from a warpage are firmly joined with each other.

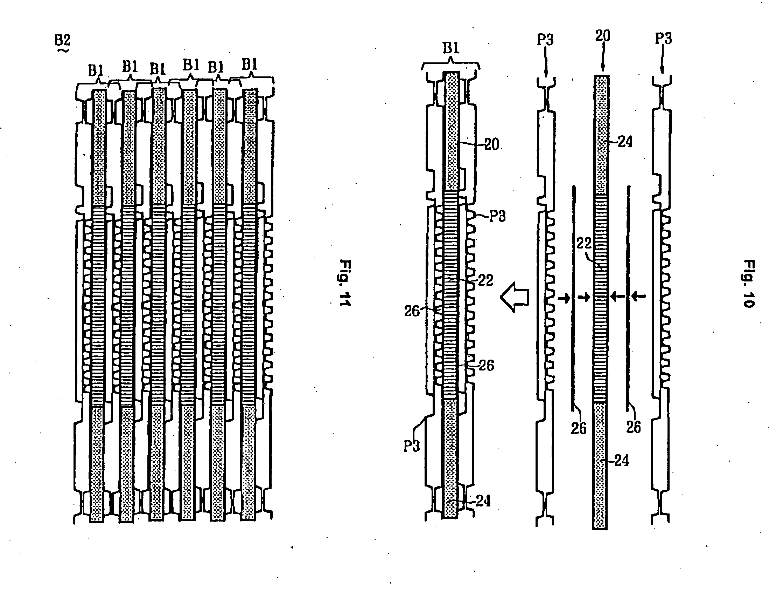

Fig. 10 is concerned with steps for preparing a fuel cell B1 of a unit cell using the metallic bipolar plate P3.

First of all, as illustrated by a black arrow on the right side in Fig. 10, a central polymer membrane body 20 and a pair of electrodes 26 to be disposed on the both sides thereof are interposed between a pair of the metallic bipolar plates P3. The polymer membrane body 20 is a membrane material which has substantially the same size as the metallic plate P2 as a whole and is composed of a central solid polymer membrane 22 and a reinforcing sealing portion 24 of a frame shape surrounding the solid polymer membrane 22. Also, one of a pair of the electrodes 26 is an anode, and the other is a cathode. Each electrode 26 is, for example, an electrode which is composed of a sheet-shaped carbon fiber and in which a carbon catalyst having a Pt fine particle carried mainly on the side coming into contact with the membrane body 20 is coated; or an electrode in which a carbon fiber having a Pt fine particle carried in a portion coming into contact with the membrane body 20 is coated, and a carbon fiber is placed thereon.

The electrodes 26 are attached to the both surfaces of the polymer membrane body 20; a pair of the metallic bipolar plates P3 is brought into contact with the outside thereof; a sealing material is interposed between the respective peripheries; a non-illustrated bolt is penetrated; and a male screw portion of the bolt is fastened by a nut.

As a result, as illustrated in the left side of a solid-white arrow in Fig. 10, the fuel cell B1 of a unit cell in which the electrodes 26 and the metallic bipolar plate P3 are symmetrically fixed on the both surfaces of the polymer membrane body 20 is obtained.

Furthermore, as illustrated in Fig. 11, by stacking and fixing a plurality of the fuel cell B1 of a unit cell along the thickness direction, a stack type fuel cell B2 can be obtained. In such a fuel cell B2, the one-sided metallic bipolar plate P3 is held in common in every two fuel cells B 1 adjacent to each other.

According to the fuel cells B1 and B2, hydrogen (fuel gas: reaction gas) which flows through the channels 6 of one of the metallic plates P3 interposing the solid polymer membrane 22 therebetween comes into contact with the adjacent anode 26 and is decomposed into a hydrogen ion and an electron; and such an electron is utilized for the generation of electricity at the time of passing through a non-illustrated external circuit and is sent to the other-sided cathode 26. On the other hand, when air (oxidizing agent gas: reaction gas) which flows through the channels 6 of the other one of the metallic plates P3 interposing the solid polymer membrane 22 comes into contact with the adjacent cathode 26, oxygen in air is ionized, and at the same time, the hydrogen ion which has passed through the solid polymer membrane 22 and the electron react with each other to form water, which is then discharged outside.

By repeating the foregoing actions, it is possible to continuously and stably perform the generation of electricity using hydrogen and air.

### Examples

Here, the invention is specifically described below with reference to the following Examples.

Firstly, 90 pieces of test raw sheets composed of a stainless steel (SUS316L) and having a thickness of 0.1 mm and a size of 100 mm (length) × 100 mm (width) were prepared in advance. With respect to 76 pieces of test raw sheets among these 90 pieces of test raw sheets, the entirety of each of the front surface 4 and the back surface 5 or a part of each of the front surface 4 and the back surface 5 was subjected to the foregoing washing step, acid treatment step and electrolytic Au-plating step (S1 to S3) under the same condition, thereby coating the Au-plated layer (thin layer of a noble metal) 3 having thickness of 3 nm, 5 nm, 8 nm, 10 nm, 15 nm, 20 nm or 30 nm as shown in Tables 1 to 3. The remaining 14 pieces of test raw sheets were allowed to stand as they were. It is meant by the terms "a part on both surfaces" in Tables 1 to 3 that the Au-plated layer 3 is coated on at least a portion which is a top surface of the convex portion 9 to be formed on the back surface of the raw sheet.

Next, in the foregoing 90 test raw sheets, the foregoing plural channels 6, convex portions 7 and header portions 10 and 11 and the like having the same size were formed on the front surface 4, and the foregoing concave portions 8 and convex portions 9 and the like were formed on the back surface 5 using the same pressing dies, thereby forming 90 pieces of metallic plates.

Furthermore, as shown in Tables 1 to 3, a combination of a pair of plates A and B was conducted among the foregoing 90 pieces of metallic plates, thereby preparing groups of Examples 1 to 18 and 22 to 35 and Comparative Examples 1 to 13. In every group of the respective Examples, a plurality of the convex portions 9 facing each other on each of the back surfaces 5 of a pair of the plates A and B were made to come close to each other; and a solder paste of 0.9 mm × 0.9 mm was coated between the Au-plated layers 3 and 3 having been coated on a top surface thereof at intervals of 1.8 mm and in the range of from 40 mm in length × 40 mm in width, followed by passing through a reflow furnace at about 200°C to achieve soldering (brazing).

Then, a pair of the metallic plates A and B in the metallic bipolar plate of every Example obtained by means of soldering was drawn by both hands such that they were separated in a planar direction. As a result, an example in which a pair of the plates was easily separated or separated by a slight force is designated as "poor", whereas an example in which even when a pair of the plates was strongly drawn, it was not separated is designated as "good" in Tables 1 to 3.

As shown in Tables 1 to 3, in all of Examples 1 to 18 and 22 to 35, even when a pair of the metallic plates A and B was strongly drawn, the separation was not caused. It is estimated that such results are attributed to the fact that since in both of the metallic plates A and B, the Au-plated layer 3 having a thickness of from 3 to 30 nm was coated in advance on the surface to be soldered, there was a portion where the solder R and the substrate 1 of each of the metallic plates A and B were directly joined with each other.

On the other hand, as shown in Tables 1 to 3, in Comparative Examples 1 to 13, a pair of the metallic plates A and B was easily separated or separated by a slight force. It is estimated that such results are attributed to the fact that since the Au-plated layer 3 was not coated on the surface to be soldered of each of the plates A and B, and the passive film 2 containing a Cr oxide was formed thereon, the solder R and the substrate 1 of each of the plates A and B were not directly joined with each other.

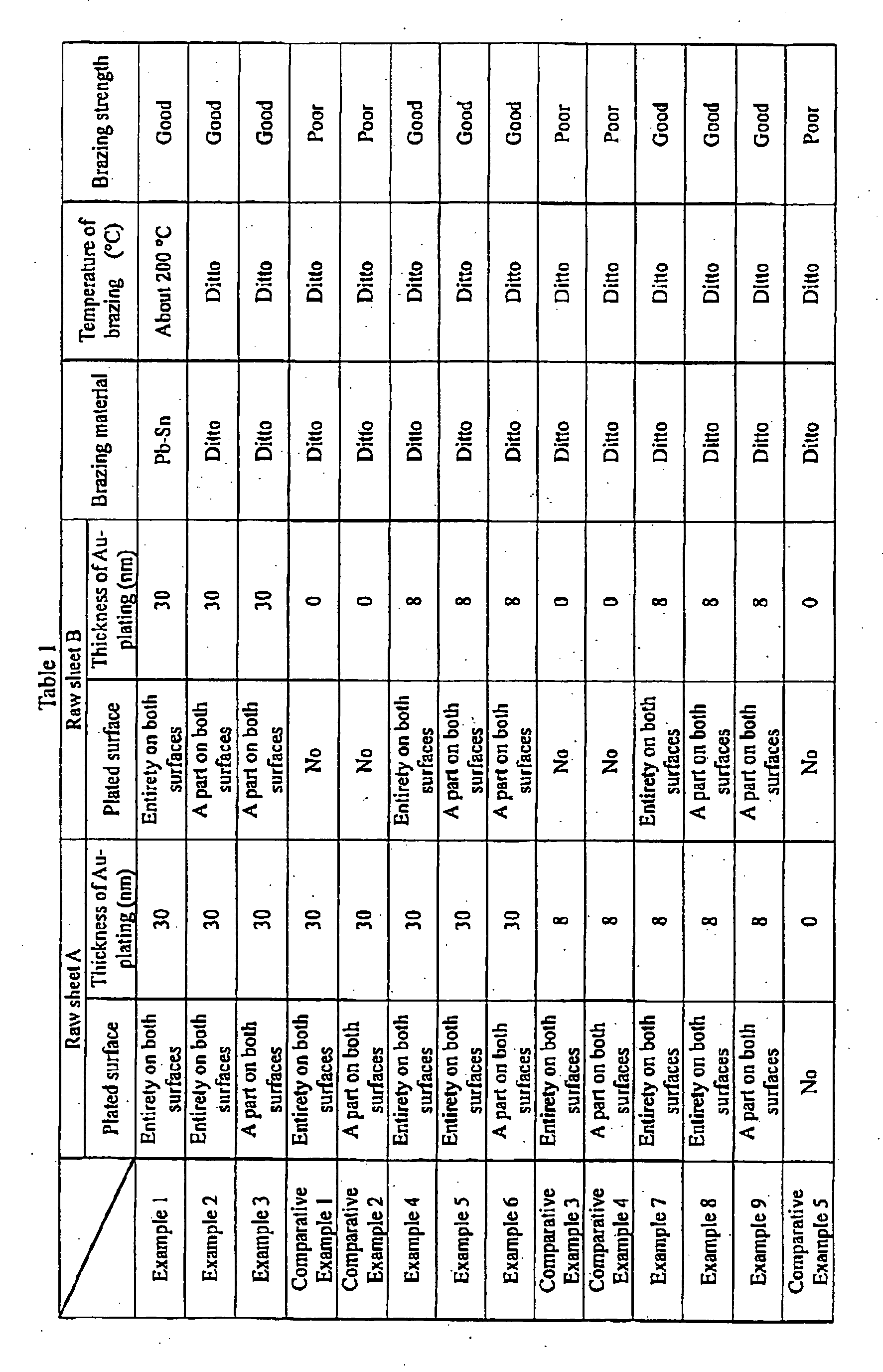

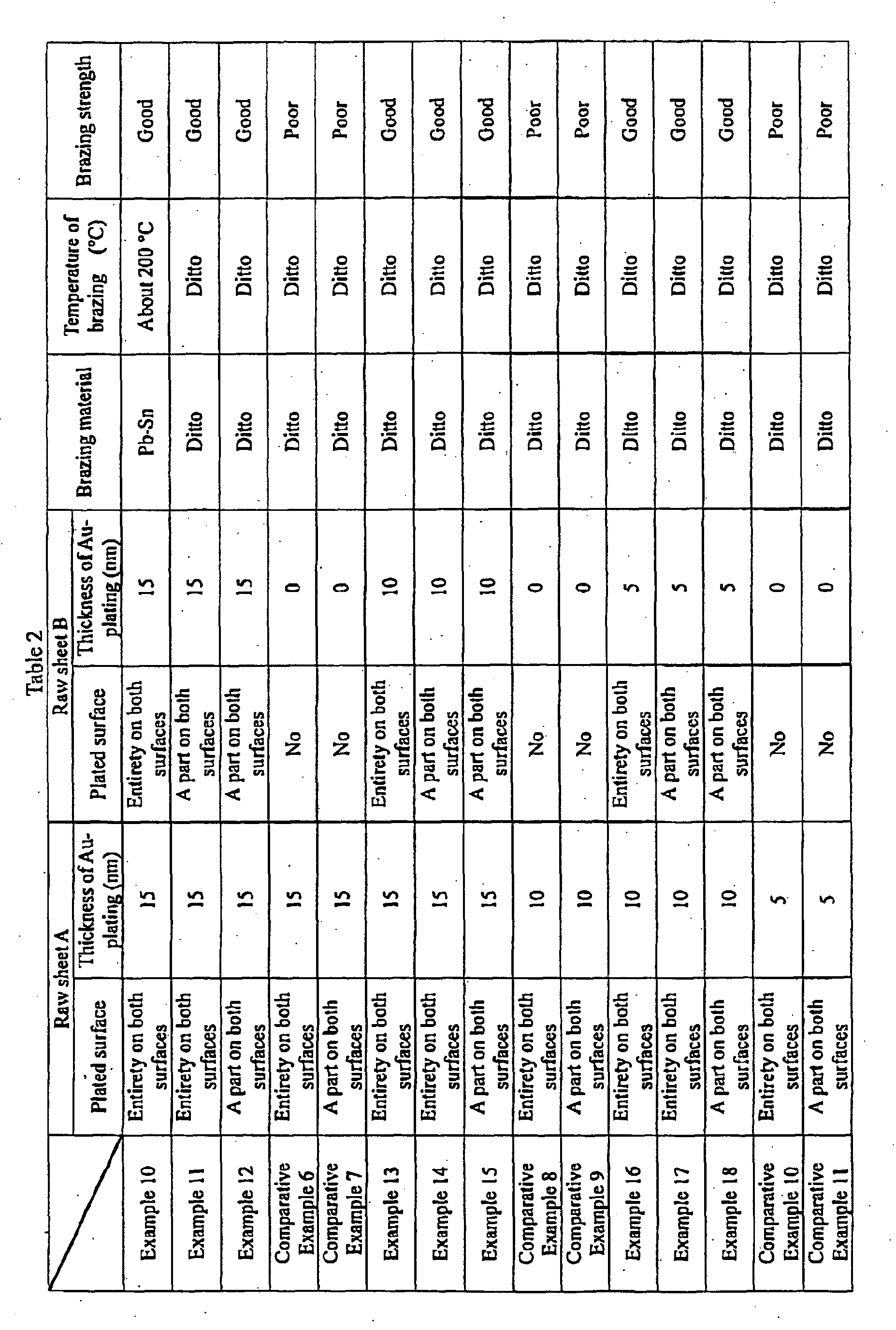

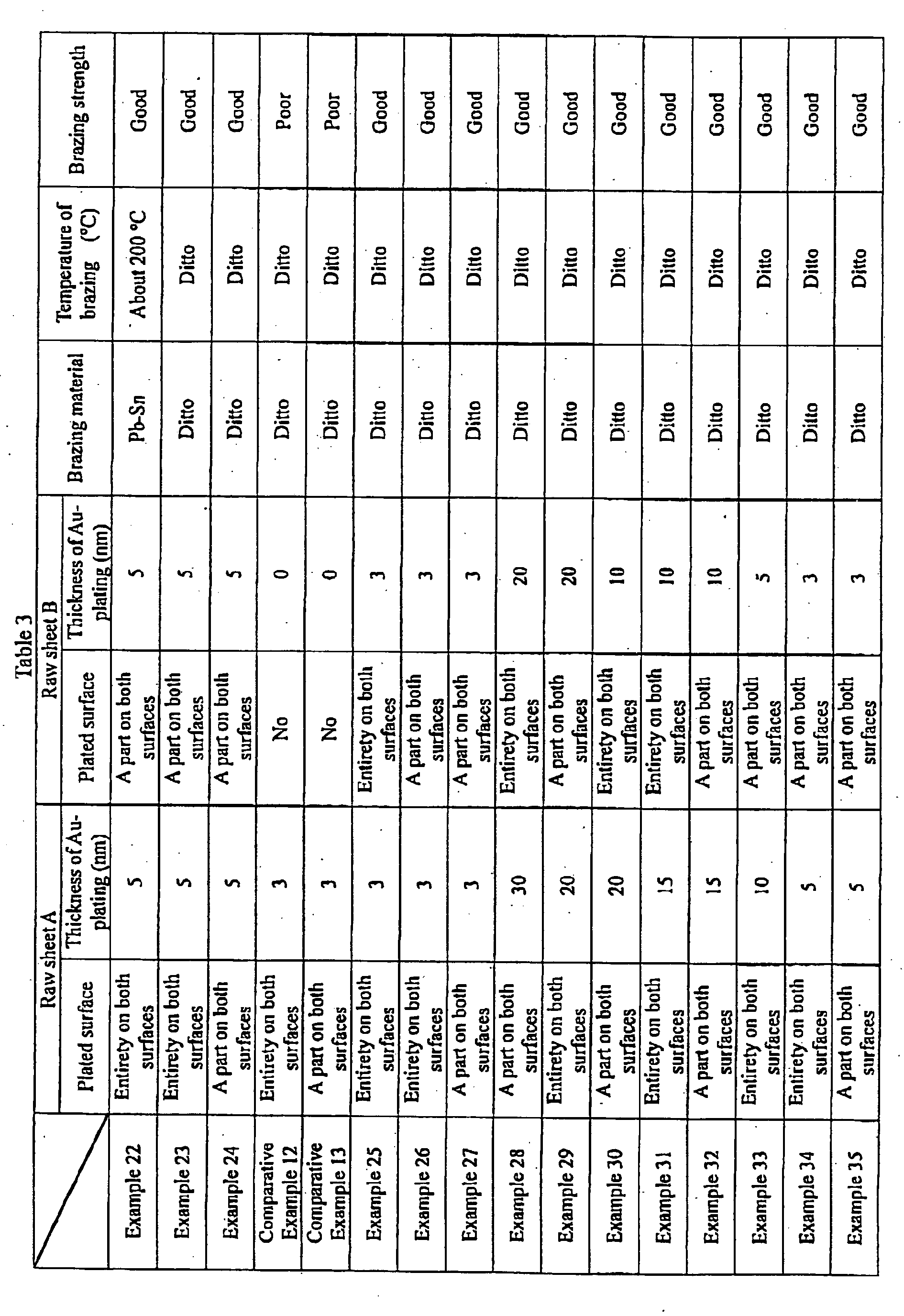

Separately, 32 pieces of test raw sheets composed of an Fe-Ni based alloy (INCOLOY825) and having a thickness of 0.1 mm and a size of 100 mm (length) × 100 mm (width) were prepared. With respect to 24 pieces of test raw sheets among these 32 pieces of test raw sheets, a central portion (part) of each of both surfaces or one surface of each was subjected to the foregoing washing step, acid treatment step and electrolytic Au-plating step (S1 to S3) under the same condition, thereby coating the Au-plated layer (thin layer of a noble metal) 3 having a thickness of 3 nm, 10 nm or 30 nm as shown in Table 4. The remaining 8 pieces of test raw sheets were allowed to stand as they were.

Next, in the foregoing 32 pieces of test raw sheets, the foregoing channels 6, convex portions 7 and header portions 10 and 11, concave portions 8 and convex portions 9 and the like were formed using the same pressing dies, thereby forming 32 pieces of metal plates.

Next, as shown in Table 4, a combination of a pair of plates A and B was conducted among the foregoing 32 pieces of metal plates, thereby preparing groups of Examples 36 to 44 and Comparative Examples 14 to 20. In every group of the respective Examples, a plurality of the convex portions 9 facing each other on each of the back surfaces 5 of a pair of the plates A and B were made to come close to each other; and a paste of a Pb-free solder (Sn-Ag-Cu based alloy) of 0.9 mm × 0.9 mm was coated between the Au-plated layers 3 and 3 having been coated on a top surface thereof at intervals of 1.8 mm and in the range of from 40 mm in length × 40 mm in width, followed by passing through a reflow furnace at about 240 °C to achieve soldering (brazing).

A pair of the metallic plates A and B in the obtained metallic bipolar plate of every Example was drawn in the same manner as described above. As a result, an example iri which a pair of the raw sheets was easily separated or separated by a slight force is designated as "poor", whereas an example in which even when a pair of the raw sheets was strongly drawn, it was not separated is designated as "good" in Table 4.

As shown in Table 4, in all of Examples 36 to 44, even when a pair of the metallic plates A and B was strongly drawn, the separation was not caused. It is estimated that such results are attributed to the fact that since in both of the metallic plates A and B, the Au-plated layer 3 having a thickness of from 3 to 30 nm was coated in advance on the surface on the side to be brazed, there was a portion where the solder R and the substrate 1 of each of the metallic plates A and B were directly joined with each other.

On the other hand, as shown in Table 4, in Comparative Examples 14 to 20, a pair of the metallic plates A and B was easily separated or separated by a slight force. It is estimated that such results are attributed to the fact that since the Au-plated layer 3 was not coated on the surface to be soldered of each of the plates A and B, and the passive film containing a Cr oxide was formed thereon, the solder R and the substrate 1 of each of the plates A and B were not directly joined with each other.

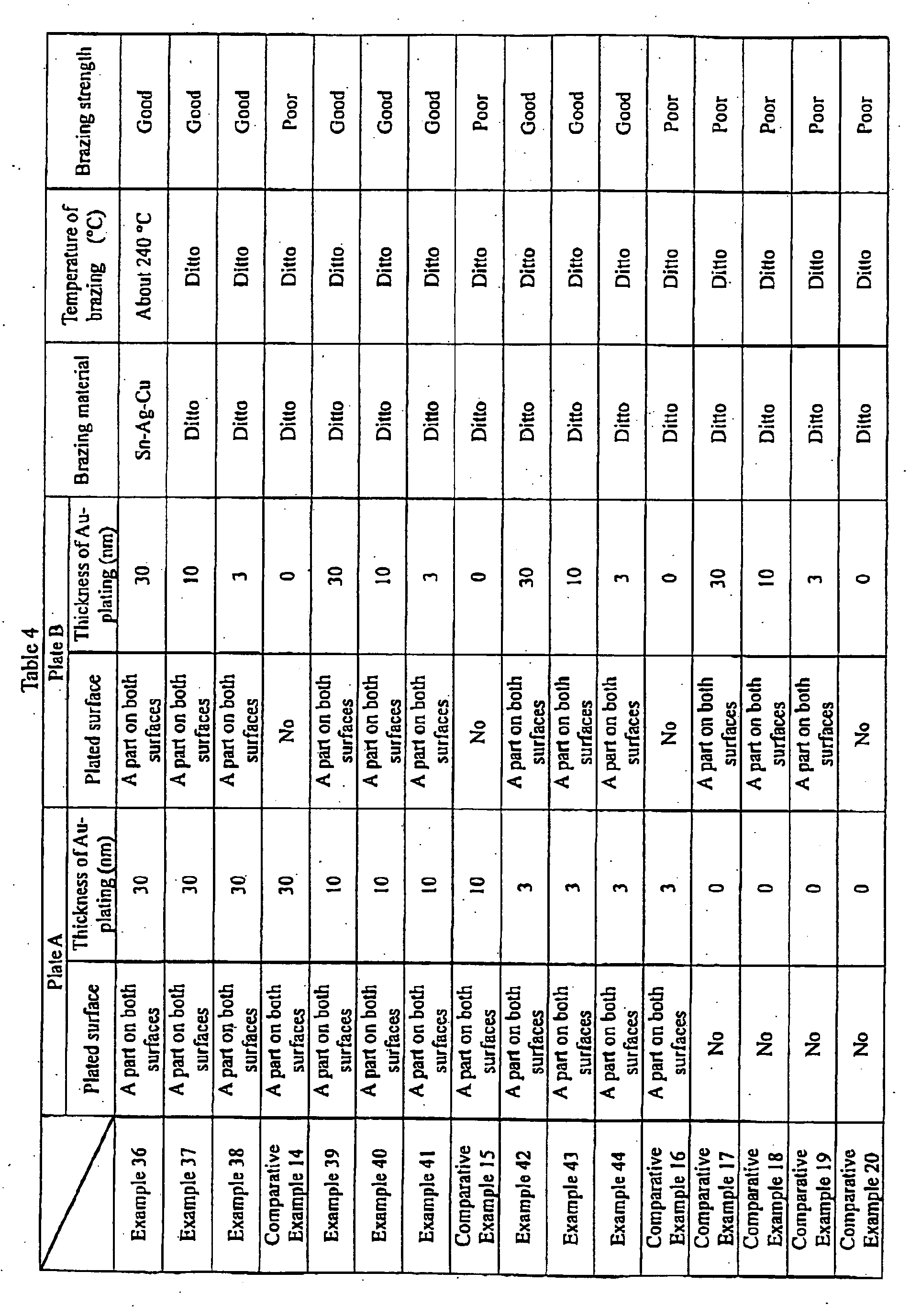

Furthermore, 30 pieces of test raw sheets composed of a stainless steel (SUS316L) and having a thickness of 0.1 mm and a size of 100 mm (length) × 100 mm (width) were prepared. With respect to 24 pieces of test raw sheets among these 30 pieces of test raw sheets, the entirety of each of the front surface 4 and the back surface 5 or a part of each of the front surface 4 and the back surface 5 was subjected to the foregoing washing step, dry etching step and Au-sputtering step (S1, S5 and S6) under the same condition, thereby coating the Au-sputtered layer (thin layer of a noble metal) 3 having a thickness of 10 nm, 30 nm or 100 nm as shown in Table 5. The remaining 6 pieces of test raw sheets were allowed to stand as they were.

Next, in the foregoing 30 pieces of test raw sheets, metallic plates similar to those described above were formed using the same pressing dies.

Next, as shown in Table 5, a combination of a pair of plates A and B was conducted among the foregoing 30 pieces of metal plates, thereby preparing groups of Examples 45 to 50 and Comparative Examples 21 to 29. In every group of the respective Examples, a plurality of the convex portions 9 facing each other on each of the back surfaces 5 of a pair of the plates A and B were made to come close to each other; and a solder paste the same as that described above was coated between the Au-sputtered layers 3 and 3 having been coated on a top thereof, followed by passing trough a reflow furnace at about 200°C to achieve soldering (brazing).

A pair of the metallic plates A and B in the obtained metallic bipolar plate of every Example was drawn in the same manner as described above. As a result, an example in which a pair of the plates was easily separated or separated by a slight force is designated as "poor", whereas an example in which even when a pair of the plates was strongly drawn, it was not separated is designated as "good" in Table 5.

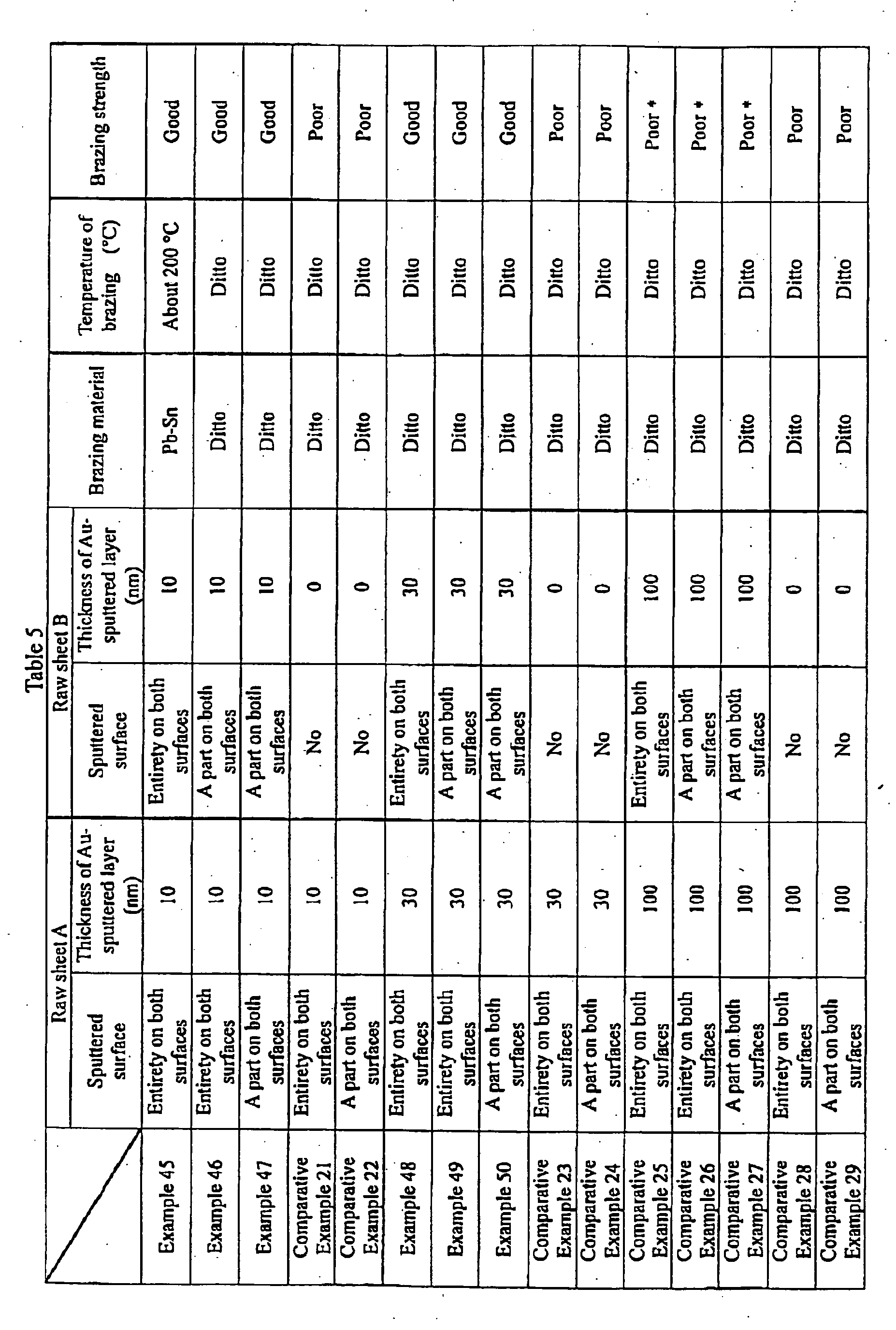

As shown in Table 5, in all of Examples 45 to 50, even when a pair of the metallic plates A and B was strongly drawn, the separation was not caused. It is estimated that such results are attributed to the fact that since in both of the metallic plates A and B, the Au-sputtered layer 3 having a thickness of from 10 to 3 0 nm was coated in advance on the surface to be brazed, there was a portion where the solder R and the substrate 1 of each of the metallic plates A and B were directly joined with each other.

On the other hand, as shown in Table 5, in Comparative Examples 21 to 29, a pair of the metallic plates A and B was easily separated or separated by a slight force. Of these, in Comparative Examples 21 to 24, 28 and 29, it is estimated that such results are attributed to the fact that since the Au-sputtered layer was not coated on the surface to be brazed of each of the plates A and B, and the passive film containing a Cr oxide was formed thereon, the solder R and the substrate 1 of each of the plates A and B were not directly joined with each other. Furthermore, in Comparative Examples 25 to 27 marked with "*", although brazing could be carried out, when the metallic plates A and B were strongly drawn, they were readily separated from each other. As a result of observation of the separated interface, it is estimated that the solder R did not reach the substrate 1, whereby the metallic plates A and B were soldered (brazed) via the remaining Au-sputtered layer.

The effects of the metallic bipolar plate P3 according to the invention were thus proven by the foregoing Examples 1 to 18 and 22 to 50.

It should not be construed that the invention is limited to the foregoing embodiments and Examples.

For example, in addition to the austenite based stainless steel (for example, SUS316L, SUS304, SUS321, etc.), an austenite/ferrite based or precipitation hardening based stainless steel may be used as the stainless steel which works as the substrate.

Also, the thin layer of a noble metal is not limited to Au but may be made of any one of Pt, Pd or Ru or may be formed as a plated layer made of an alloy using such a noble metal as a basis material or the like.

Furthermore, an embodiment in which the channels of a reaction gas to be formed on the metallic plate are disposed in such a manner that plural channels having a linear shape which lie in parallel to each other are disposed between a pair of header portions facing each other may also be adopted.

In addition, the brazing material for brazing a pair of the metallic plates is not limited to the solder but may be a paste-shaped or preform material made of a low-melting alloy of every sort.

Generally, the present application discloses a method for manufacturing a metallic bipolar plate, especially for fuel cells, comprising washing surfaces of a substrate removing a passive film therefrom, coating a noble metal (or alloy thereof) on an area where the passive film has been removed, and press forming the substrate. In the above, a basis material of an alloy comprises more of the base metal(s) by weight than of any other constituent; and in embodiments, comprises more than 50% by weight of the base metals(s).

While the present invention has been described in detail and with reference to specific embodiments thereof, it will be apparent to one skilled in the art that various changes and modifications can be made therein without departing from the scope thereof as defined by the appended claims.

The present application is based on Japanese Patent Application No. 2007-304544 filed on November 26, 2007 and Japanese Patent Application No. 2008-256993 filed on October 2, 2008.

## Claims

1. A metallic bipolar plate for fuel cells, comprising:
a pair of metallic plates (P2) for fuel cells, each comprising a substrate (1) which comprises a stainless steel, an Fe-Ni based alloy or an Ni-base alloy, has a front surface (4) and a back surface (5), and has a plurality of channels (6) of a reaction gas formed on the front surface (4); and
a brazed portion joining the back surfaces (5) of the substrates (1) in such a way that the pair of metallic plates (P2) are made to face each other,
wherein, in the pair of metallic plates (P2), a thin layer (3) of a noble metal is coated on an entirety of the front surface (4) of each of the substrates (1) or on at least a part of a convex portion between the plurality of channels (6) of a reaction gas on the front surface (4) of each of the substrates (1), and another thin layer (3) of a noble metal having a thickness of from 0.5 to 60 nm is coated on an entirety of the back surface (5) of each of the substrates (1) or on at least a part including the brazed portion on the back surface (5) of each of the substrates (1), and
wherein the metallic bipolar plate (P3) has, directly below a brazing material (R) in the brazed portion, a joint portion where the thin layer of a noble metal is not present and the brazing material (R) and the substrate (1) are directly joined with each other.

2. The metallic bipolar plate for fuel cells according to claim 1, wherein the thin layer (3) of a noble metal coated on the entirety of the back surface (5) of each of the substrates (1) or an at least the part including the brazed portion on the back surface (5) of each of the substrates (1) has a thickness of from 1 to 20 nm.

3. The metallic bipolar plate for fuel cells according to claim 1, wherein the joint portion where the brazing material (R) of the brazed portion and the substrate (1) are directly joined with each other occupies 30% or more of an area at an interface between the brazing material (R) and the substrate (1).

4. The metallic bipolar plate for fuel cells according to claim 2, wherein the joint portion where the brazing material (R) of the brazed portion and the substrate (1) are directly joined with each other occupies 30% or more of an area at an interface between the brazing material (r) and the substrate (1).

5. A method for manufacturing a metallic bipolar plate for fuel cells, comprising the steps of:
washing (S1) an entirety or a part of a front surface (4) of a substrate (1) on which a plurality of channels (6) of a reaction gas is subsequently formed and an entirety or a part of a back surface (5) of the substrate (1) on which the plurality of channels (6) of a reaction gas is not subsequently formed, the substrate (1) comprising a stainless steel, an Fe-Ni based alloy or a Ni-base alloy;
subjecting the entirety or a part of each of the washed front surface (4) and a back surface (5) of the substrate (1) to an acid treatment (S2), thereby removing a passive film;
coating (S3) a thin layer (3) of a noble metal directly on the entirety or a part of each of the front surface (4) and back surface (5) of the substrate (1) from which a passive film has been removed;
press forming (S4) the substrate having the thin layer (3) of a noble metal coated thereon to form the plurality of channels (6) of a reaction gas on the front surface (4) of the substrate (1), thereby forming a metallic plate (P2) for fuel cells;
making the back surfaces (5) of the substrates (1) of a pair of the metallic plates (P2) face each other and disposing a brazing material (R) between portions of the substrates (1) each having a thin layer (3) of a noble metal and being adjacent between the back surfaces (5) thereof; and
heating the brazing material (R) at a temperature higher than a melting point thereof, thereby diffusing and absorbing the thin layers (3) of a noble metal being in contact with the brazing material (R) and directly brazing the brazing material (R) and the pair of adjacent substrates (1).

6. A method for manufacturing a metallic bipolar plate for fuel cells, comprising the steps of:
washing (S1) an entirety or a part of a front surface (4) of a substrate (1) on which a plurality of channels (6) of a reaction gas is subsequently formed and an entirety or a part of a back surface (5) of the substrate (1) on which the plurality of channels (6) of a reaction gas is not subsequently formed, the substrate (1) comprising a stainless steel, an Fe-Ni based alloy or a Ni-base alloy;
irradiating (S5) the entirety or a part of each of the washed front surface (4) and back surface (5) of the substrate (1) with an ion beam, thereby removing a passive film;
subjecting the entirety or a part of each of the front surface (4) and back surface (5) of the substrate (1) from which a passive film has been reomoved to sputtering (S6) with a noble metal, thereby directly coating a thin layer (3) of a noble metal on the substrate;
press forming (S4) the substrate (1) having the thin layer (3) of a noble metal coated thereon to form the plurality of channels (6) of a reaction gas on the front surface (4) of the substrate (1), thereby forming a metallic plate (P2) for fuel cells;
making the back surfaces (5) of the substrates (1) of a pair of the metallic plates (P2) face each other and disposing a brazing material (R) between portions of the substrates (1) each having the thin layer (3) of a noble metal and being adjacent between the back surfaces (5) thereof; and
heating the brazing material (R) at a temperature higher than a melting point thereof, thereby diffusing and absorbing the thin layers (3) of a noble metal being in contact with the brazing material (R) and directlty brazing the brazing material (R) and the pair of adjacent substrates (1).

7. Use of the metallic bipolar plate according to one of claims 1 to 4 in the manufacturing of a fuel cell (B1).

8. Use of the metallic bipolar plate as manufactured according to claim 5 or 6 in the manufacturing of a fuel cell (B1).

9. The use according to claim 7 or 8, further comprising disposing a pair of the plates on both sides of a membrane electrode assembly (20,26).

10. The use according to claim 9, further comprising stacking and fixing a plurality of the fuel cells (B1) along the thickness direction so as to obtain a stack type fuel cell (B2).

## Patentansprüche

1. Bipolare Metallplatte für Brennstoffzellen, umfassend:
ein Paar von Metallplatten (P2) für Brennstoffzellen, wobei jede ein Substrat (1) umfasst, welches einen rostfreien Stahl, eine Legierung auf Fe-Ni-Basis oder eine Legierung auf Ni-Basis umfasst, eine Vorderseite (4) und eine Rückseite (5) und mehrere Reaktionsgaskanäle (6) hat, die auf der Vorderfläche (4) gebildet sind; und
einen hartgelöteten Abschnitt, der sich an die Rückseiten (5) der Substrate (1) derart anschließt, dass das Paar von Metallplatten (P2) einander gegenüberliegt,
wobei im Paar von Metallplatten (P2) eine dünne Schicht (3) eines Edelmetalls auf die ganze Vorderfläche (4) jedes der Substrate (1) oder auf mindestens einen Teil eines konvexen Abschnitts zwischen den mehreren Reaktionsgaskanälen (6) auf der Vorderseite (4) jedes der Substrate (1) aufgetragen ist, und ein weitere dünne Schicht (3) eines Edelmetalls, die eine Dicke von 0,5 bis 60 nm hat, auf die ganze Rückseite (5) jedes der Substrate (1) oder zumindest auf einen Teil, einschließlich des hartgelöteten Abschnittes auf der Rückseite (5) jedes der Substrate (1), aufgetragen ist, und
wobei die bipolare Metallplatte (P3), direkt unter einem Hartlotmaterial (R) im hartgelöteten Abschnitt, einen gemeinsamen Abschnitt hat, in dem die dünne Schicht eines Edelmetalls nicht vorhanden ist und das Hartlotmaterial (R) und das Substrat (1) direkt miteinander verbunden sind.

2. Bipolare Metallplatte für Brennstoffzellen gemäß Anspruch 1, wobei die dünne Schicht (3) eines Edelmetalls, das auf die ganze Rückseite (5) jedes der Substrate (1) oder zumindest auf den Teil aufgetragen ist, der den hartgelöteten Abschnitt auf der Rückseite (5) jedes der Substrate (1) einschließt, eine Dicke von 1 bis 20 nm hat.

3. Bipolare Metallplatte für Brennstoffzellen gemäß Anspruch 1, wobei der gemeinsame Abschnitt, in dem das Hartlotmaterial (R) des hartgelöteten Abschnitts und das Substrat (1) direkt miteinander verbunden sind, 30 % oder mehr einer Fläche an der Grenzfläche zwischen dem Hartlotmaterial (R) und dem Substrat (1) einnimmt.

4. Bipolare Metallplatte für Brennstoffzellen gemäß Anspruch 2, wobei der gemeinsame Abschnitt, in dem das Hartlotmaterial (R) des hartgelöteten Abschnitts und das Substrat (1) direkt miteinander verbunden sind, 30 % oder mehr einer Fläche an der Grenzfläche zwischen dem Hartlotmaterial (r) und dem Substrat (1) einnimmt.

5. Verfahren zum Herstellen einer bipolaren Metallplatte für Brennstoffzellen, das die folgenden Schritte umfasst:
Waschen (S1) der ganzen oder eines Teils einer Vorderseite (4) eines Substrats (1), auf der anschließend mehrere Reaktionsgaskanäle (6) gebildet sind, und der ganzen oder eines Teils einer Rückseite (5) des Substrats (1), auf der anschließend die mehreren Reaktionsgaskanäle (6) nicht gebildet sind, wobei das Substrat (1) einen rostfreien Stahl, eine Legierung auf Fe-Ni-Basis oder eine Legierung auf Ni-Basis umfasst;
Anwenden einer Säurebehandlung (S2) auf die ganze oder einen Teil sowohl der gewaschenen Vorderseite (4) wie auch einer Rückseite (5) des Substrats (1), wodurch ein Passivfilm entfernt wird;
Auftragen (S3) einer dünnen Schicht (3) eines Edelmetalls direkt auf die ganze oder einen Teil sowohl der Vorderseite (4) wie auch der Rückseite (5) des Substrats (1), von dem ein Passivfilm entfernt wurde;
Pressformen (S4) des Substrats, das die dünne Schicht (3) eines Edelmetalls darauf aufgetragen hat, um die mehreren Reaktionsgaskanäle (6) auf der Vorderseite (4) des Substrats (1) zu bilden, wodurch eine Metallplatte (P2) für Brennstoffzellen gebildet wird;
Bewirken, dass die Rückseiten (5) der Substrate (1) eines Paars der Metallplatten (P2) einander gegenüberliegen, und Anordnen eines Hartlotmaterials (R) zwischen Abschnitten der Substrate (1), die jeweils eine dünne Schicht (3) eines Edelmetalls tragen und zwischen den Rückseiten (5) derselben aneinander grenzen; und
Erwärmen des Hartlotmaterials (R) auf eine Temperatur oberhalb eines Schmelzpunktes desselben, **dadurch** Diffundieren und Absorbieren der Dünnschichten (3) eines Edelmetalls, das in Kontakt mit dem Hartlotmaterial (R) steht, und direktes Verlöten des Hartlotmaterials (R) und des Paars von benachbarten Substraten (1).

6. Verfahren zum Herstellen einer bipolaren Metallplatte für Brennstoffzellen, das die folgenden Schritte umfasst:
Waschen (S1) der ganzen oder eines Teils einer Vorderseite (4) eines Substrats (1), auf der anschließend mehrere Reaktionsgaskanäle (6) gebildet sind, und der ganzen oder eines Teils einer Rückseite (5) des Substrats (1), auf der die mehreren Reaktionsgaskanäle (6) anschließend nicht gebildet sind, wobei das Substrat (1) einen rostfreien Stahl, eine Legierung auf Fe-Ni-Basis oder eine Legierung auf Ni-Basis umfasst;
Bestrahlen (S5) der ganzen oder eines Teils sowohl der gewaschenen Vorderseite (4) wie auch der Rückseite (5) des Substrats (1) mit einem Ionenstrahl, wodurch ein Passivfilm entfernt wird;
Anwenden des Sputterns (S6) mit einem Edelmetall auf die ganze oder einen Teil sowohl der Vorderseite (4) wie auch der Rückseite (5) des Substrats (1), von dem ein Passivfilm entfernt wurde, **dadurch** direktes Auftragen einer dünnen Schicht (3) eines Edelmetalls auf das Substrat;
Pressformen (S4) des Substrats (1), das die dünne Schicht (3) eines Edelmetalls hat, welche darauf aufgetragen ist, um die mehreren Reaktionsgaskanäle (6) auf der Vorderseite (4) des Substrats (1) zu bilden, wodurch eine Metallplatte (P2) für Brennstoffzellen gebildet wird;
Bewirken, dass die Rückseiten (5) der Substrate (1) eines Paars der Metallplatten (P2) einander gegenüberliegen, und Anordnen eines Hartlotmaterials (R) zwischen Abschnitten der Substrate (1), die jeweils die dünne Schicht (3) eines Edelmetalls tragen und zwischen den Rückseiten (5) derselben aneinander grenzen; und
Erwärmen des Hartlotmaterials (R) auf eine Temperatur oberhalb eines Schmelzpunktes desselben, **dadurch** Diffundieren und Absorbieren der Dünnschichten (3) eines Edelmetalls, das in Kontakt mit dem Hartlotmaterial (R) steht, und direktes Verlöten des Hartlotmaterials (R) und des Paars von benachbarten Substraten (1).

7. Verwenden der bipolaren Metallplatte nach einem der Ansprüche 1 bis 4 beim Herstellen einer Brennstoffzelle (B1).

8. Verwenden der bipolaren Metallplatte, die nach einem der Ansprüche 5 oder 6 hergestellt ist, beim Herstellen einer Brennstoffzelle (B1).

9. Verwendung gemäß Anspruch 7 oder 8, die ferner das Anordnen eines Paars der Platten auf beiden Seiten einer Membranelektrodengruppe (20, 26) umfasst.

10. Verwendung gemäß Anspruch 9, die ferner das Stapeln und Befestigen mehrerer Brennstoffzellen (B1) in Richtung der Dicke umfasst, um so eine stapelartige Brennstoffzelle (B2) zu erhalten.

## Revendications

1. Plaque métallique bipolaire pour piles à combustible, comprenant :
une paire de plaques métalliques (P2) pour piles à combustible, plaque dont chacune comprend un substrat (1) constitué d'un acier inoxydable, d'un alliage à base de Fe-Ni ou d'un alliage à base de Ni, comporte une surface avant (4) et une surface arrière (5), et présente, sur la surface avant (4), une série de canaux (6) pour un gaz de réaction ; et
une portion brasée réunissant les surfaces arrière (5) des substrats (1) de telle manière que les plaques métalliques (P2) de la paire sont mises en vis-à-vis l'une de l'autre,
plaque dans laquelle, dans la paire de plaques métalliques (P2), l'intégralité de la surface avant (4) de chacun des substrats (1), ou au moins une partie d'une portion convexe entre la série de canaux (6) pour un gaz de réaction sur la surface avant (4) de chacun des substrats (1), est revêtue d'une couche mince (3) d'un métal noble, et l'intégralité de la surface arrière (5) de chacun des substrats (1), ou au moins une partie y compris la portion brasée sur la surface arrière (5) de chacun des substrats (1), est revêtue d'une autre couche mince (3) d'un métal noble ayant une épaisseur comprise entre 0,5 et 60 nm.,
la plaque métallique bipolaire (P3) ayant, directement au-dessous d'un matériau de brasage (R) dans la portion brasée, une portion de jonction où la couche mince d'un métal noble est absente, le matériau de brasage (R) et le substrat (1) étant réunis directement l'un à l'autre.

2. Plaque métallique bipolaire pour piles à combustible selon la revendication 1, dans lequel la couche mince (3) d'un métal noble revêtant l'intégralité de la surface arrière (5) de chacun des substrats (1), ou au moins une partie y compris la portion brasée sur la surface arrière (5) de chacun des substrats (1), a une épaisseur comprise entre 1 et 20 nm.

3. Plaque métallique bipolaire pour piles à combustible selon la revendication 1, dans laquelle la portion de jonction dans laquelle le matériau de brasage (R) de la portion brasée et le substrat (1) sont directement réunis l'un à l'autre occupe 30 % ou plus d'une zone à l'interface entre le matériau de brasage (R) et le substrat (1).

4. Plaque métallique bipolaire pour piles à combustible selon la revendication 2, dans laquelle la portion de jonction dans laquelle le matériau de brasage (R) de la portion brasée et le substrat (1) sont directement réunis l'un à l'autre occupe 30 % ou plus d'une zone à l'interface entre le matériau de brasage (R) et le substrat (1).

5. Procédé de fabrication d'une plaque métallique bipolaire pour piles à combustible, comprenant les étapes suivantes :
le lavage (S1) d'une intégralité ou d'une partie d'une surface avant (4) d'un substrat (1) sur laquelle est formée ultérieurement une série de canaux (6) pour un gaz de réaction et d'une intégralité ou d'une partie d'une surface arrière (5) du substrat (1) sur laquelle n'est pas formée ultérieurement une série de canaux (6) pour un gaz de réaction, le substrat (1) étant constitué d'un acier inoxydable, d'un alliage à base de Fe-Ni ou d'un alliage à base de Ni ;
le fait de soumettre l'intégralité ou une partie de chacune des surface avant (4) et surface arrière (5), lavées, du substrat (1) à un traitement acide (S2), éliminant ainsi une pellicule passive ;
le revêtement direct (S3), à l'aide d'une couche mince (3) d'un métal noble, de l'intégralité ou d'une partie de chacune des surface avant (4) et surface arrière (5), lavées, du substrat (1) duquel une pellicule passive a été éliminée ;
le pliage à la presse (S4) du substrat revêtu de la couche mince (3) de métal noble pour former la série de canaux (6) pour un gaz de réaction sur la surface avant (4) du substrat (1); réalisant ainsi une plaque métallique (7) pour piles à combustible ;
l'amenée en vis-à-vis des surfaces arrière (5) des substrats (1) d'une paire de plaques métalliques (P2) et la mise en place d'un matériau de brasage (R) entre des portions des substrats (1) dont chacun a une couche mince (3) d'un métal noble, lesquelles sont adjacentes entre les surfaces arrière (5) de ceux-ci ; et
le chauffage du matériau de brasage (R) à une température supérieure au point de fusion de celui-ci, faisant ainsi diffuser et absorber les couches minces (3) d'un métal noble qui sont en contact avec le matériau de brasage (R) et brasant ainsi directement le matériau de brasage (R) et la paire de substrats (1) adjacents.

6. Procédé de fabrication d'une plaque métallique bipolaire pour piles à combustible, comprenant les étapes suivantes :
le lavage (S1) d'une intégralité ou d'une partie d'une surface avant (4) d'un substrat (1) sur laquelle est formée ultérieurement une série de canaux (6) pour un gaz de réaction et d'une intégralité ou d'une partie d'une surface arrière (5) du substrat (1) sur laquelle n'est pas formée ultérieurement une série de canaux (6) pour un gaz de réaction, le substrat (1) étant constitué d'un acier inoxydable, d'un alliage à base de Fe-Ni ou d'un alliage à base de Ni ;
l'irradiation (S5) de l'intégralité ou d'une partie de chacune des surface avant (4) et surface arrière (5), lavées, du substrat (1) au moyen d'un faisceau d'ions, éliminant ainsi une pellicule passive ;
le fait de soumettre l'intégralité ou une partie de chacune des surface avant (4) et surface arrière (5) du substrat (1), duquel a été éliminée une pellicule passive, à une pulvérisation cathodique (S6) à l'aide d'un métal noble, revêtant ainsi directement le substrat d'une couche mince (3) d'un métal noble ;
le pliage à la presse (S4) du substrat revêtu de la couche mince (3) de métal noble pour former la série de canaux (6) pour un gaz de réaction sur la surface avant (4) du substrat (1) ; réalisant ainsi une plaque métallique (7) pour piles à combustible ;
l'amenée en vis-à-vis des surfaces arrière (5) des substrats (1) d'une paire de plaques métalliques (P2) et la mise en place d'un matériau de brasage (R) entre des portions des substrats (1) dont chacun a une couche mince (3) d'un métal noble, lesquelles sont adjacentes entre les surfaces arrière (5) de ceux-ci ; et
le chauffage du matériau de brasage (R) à une température supérieure au point de fusion de celui-ci, faisant ainsi diffuser et absorber les couches minces (3) d'un métal noble qui sont en contact avec le matériau de brasage (R) et brasant ainsi directement le matériau de brasage (R) et la paire de substrats (1) adjacents.

7. Utilisation de la plaque métallique bipolaire selon l'une quelconque des revendications 1 à 4 dans la fabrication d'une pile à combustible (B1).

8. Utilisation de la plaque métallique bipolaire telle que fabriquée selon la revendication 5 ou 6 dans la fabrication d'une pile à combustible (B1).

9. Utilisation selon la revendication 7 ou 8, comprenant, en outre, la mise en place d'une paire des plaques de chaque côté d'un ensemble formant électrode à membrane (20,26).

10. Utilisation selon la revendication 9, comprenant, en outre, l'empilage et la fixation d'une pluralité des piles à combustible (B1) dans la direction de l'épaisseur de façon à obtenir une pile à combustible du type à empilement (B2).
